# EUROPÄISCHE PATENTSCHRIFT

(11) **EP 3 357 787 B1**
(45) Veröffentlichungstag und Bekanntmachung des Hinweises auf die Patenterteilung: **18.12.2019**
(21) Anmeldenummer: 18152700.3
(22) Anmeldetag: 22.01.2018
(51) Int. Cl.: B62B 3/14

(54) **MIT GLEICHEN ODER ÄHNLICHEN WAGEN STAPELBARER EINKAUFSWAGEN**
SHOPPING CART STACKABLE WITH EQUAL OR SIMILAR CARTS
CHARIOT DE SUPERMARCHÉ EMPILABLE AVEC UN CHARIOT IDENTIQUE OU ANALOGUE

(30) Priorität: 01.02.2017 DE 202017100528 U
(43) Veröffentlichungstag der Anmeldung: 08.08.2018
(73) Patentinhaber: Sogomonyan, Zaven, 141601 Klin, Mosow Region (RU)
(72) Erfinder: Sogomonyan, Zaven, 141601 Klin, Mosow Region (RU)
(74) Vertreter: Charrier Rapp & Liebau

(56) Entgegenhaltungen:
- DE-B4-102005 017 386
- DE-U1- 8 714 522
- DE-U1- 8 903 451
- DE-U1- 29 809 776

## Beschreibung

Mit gleichen oder mit ähnlichen Wagen stapelbarer Einkaufswagen, mit einem mit vorderen und mit hinteren Fahrrollen ausgestatteten Fahrgestell, mit einer oberen Abstelleinrichtung zur Aufnahme von Ware, mit einer rückseitig befindlichen Schiebeeinrichtung und mit einer zum Abstellen weiterer Ware bestimmten unteren Abstelleinrichtung, die auf einer im vorderen Bereich des Fahrgestelles befindlichen ersten Abstützstelle gelagert ist, wobei die Vorderseite und die beiden Längsseiten des Fahrgestelles ein unteres Rahmenelement und ein oberes Rahmenelement aufweisen, deren Längsseiten sich in Schieberichtung des Einkaufswagens in einem spitzen Winkel annähern und das obere Rahmenelement in einem zwischen den vorderen und den hinteren Fahrrollen befindlichen Bereich nach unten abgeknickt ist, wobei das Fahrgestell rückseitig eine Stützeinrichtung aufweist, die mit dem unteren und mit dem oberen Rahmenelement verbunden ist und beidseitig je einen Stützrahmen aufweist, wobei jeder Stützrahmen mit einem oben angeordneten Stützmittel zum Befestigen der oberen Abstelleinrichtung ausgestattet ist, wobei ferner jeder Stützrahmen einen hinteren Rahmenabschnitt und einen vorderen Rahmenabschnitt aufweist und wobei rückseitig ein Querverbindungsstück vorgesehen ist, das eine zweite Abstützstelle für die untere Abstelleinrichtung bildet.

Einkaufswagen dieser Ausführung bilden jene klassische Art von Wagen, die seit Jahrzehnten bekannt sind und die sich zum zusätzlichen Transport von Getränkekisten eignen. Die Getränkekisten lassen sich auf der unteren Abstelleinrichtung abstellen und transportieren.

Die Erfindung betrifft einen Einkaufswagen gemäß dem Oberbegriff von Anspruch 1. Das Dokument DE 10 2005 017 386 B4 zeigt einen derartigen Einkaufswagen. Die Stützeinrichtung dieses Einkaufswagens weist zwei Stützrahmen auf, deren vordere und hintere Rahmenabschnitte mit dem unteren und mit dem oberen Rahmenelement kreuzweise verbunden sind. Zwischen den Rahmenabschnitten angeordnet ist ein U-förmiges Querverbindungsstück vorgesehen, dessen nach unten gerichtete Schenkel ebenfalls kreuzweise mit dem unteren und mit dem oberen Rahmenelement verbunden sind. Das obere Rahmenelement ist in dem zwischen den vorderen Fahrrollen und den hinteren Fahrrollen befindlichen Bereich nach unten abgeknickt. Neben einer als Korb gestalteten oberen Abstelleinrichtung ist eine untere Abstelleinrichtung am Fahrgestell angeordnet. Beide Abstelleinrichtungen sind zur Aufnahme und zum Tragen von Ware bestimmt. An der Rückseite der oberen Abstelleinrichtung ist eine Schiebeeinrichtung in Form eines quer verlaufenden Griffes vorgesehen.
Ein vergleichbares Fahrgestell für einen Einkaufswagen wird auch durch die EP 0 848 669 B1 offenbart, doch fehlen hier das Querverbindungsstück und die untere Abstelleinrichtung. Dennoch zeigt dieses Dokument deutlich die Anordnung und die gegenseitige Verbindung von unterem und oberem Rahmenelement einerseits und der beiden Stützrahmen andererseits.

Das Dokument EP 1 693 809 A1 vermittelt einen stapelbaren Einkaufswagen mit einem Fahrgestell, das einen trapezförmigen Rahmen aufweist, dessen längere Seite, wie bei fast allen Einkaufswagen ebenfalls fehlt. An den beiden freien Enden des Rahmens ist zu beiden Seiten je ein Stützrahmen angeordnet, der die obere Abstelleinrichtung trägt. Der hintere Rahmenabschnitt der Stützrahmen ist jeweils mit der hinteren senkrechten Schnittfläche des Rahmens verschweißt, während jeder vordere Rahmenabschnitt mit einem Stützabschnitt, auf der Oberseite des Rahmens ruhend, ebenfalls mit dem Rahmen verschweißt ist. Die Stützabschnitte der beiden vorderen Rahmenabschnitte weisen zur Vorderseite des Fahrgestelles. Einen ähnlichen Einkaufswagen, der mit einer unteren Abstelleinrichtung ausgestattet ist, kennt man unter der Typbezeichnung "BT". Hersteller solcher Einkaufswagen war oder ist die Wanzl Metallwarenfabrik GmbH in Deutschland.

Das Dokument EP 2 558 347 B1 beschreibt mit gleichen und ähnlichen Wagen stapelbare Einkaufswagen, die sich enger stapeln lassen als im späteren Gebrauch, um die Frachtkosten beim Transport solcher Wagen zu reduzieren. Einkaufswagen mit großvolumigen oberen Abstelleinrichtungen müssen mit Hilfe der Stützeinrichtung ausreichend abgestützt sein, um ein Verbiegen der als Körbe gestalteten oberen Abstelleinrichtung zu verhindern und um unerwünschte Schwingungen dieser Anordnung zu vermeiden.

Es ist Aufgabe der Neuerung, einen Einkaufswagen der eingangs genannten Art so weiterzuentwickeln, dass die untere Abstelleinrichtung eine große, leicht be- und entladbare Abstellfläche für beispielsweise zwei Getränkekisten bildet und dass zusätzlich im Sinne der Erfindung gemäß des Dokuments EP 2 558 347 B1 ganz enge Stapelabstände erreichbar sind, wenn es gilt, derartige Einkaufswagen in Stapeln platzsparend zu transportieren.

Die Lösung der Aufgabe ist im kennzeichnenden Teil des Schutzanspruchs 1 beschrieben.

Durch die gemeinsame Abknickung des oberen und des unteren Rahmenelementes des Fahrgestelles erzielt man in vorteilhafter Weise eine Vergrößerung des zwischen der Unterseite der oberen Abstelleinrichtung und der Stellfläche der unteren Abstelleinrichtung gelegenen Raumes. Das erlaubt ein bequemes Be- und Entladen der unteren Abstelleinrichtung mit Getränkekisten. Begünstigt wird dies ferner dadurch, dass jener Abschnitt der unteren Abstelleinrichtung, der sich im Bereich der zur Rückseite hin abfallenden ersten Abschnitte des Fahrgestelles befindet, entweder parallel zum oberen Rahmenelement oder leicht steiler als dieses angeordnet ist. Es empfiehlt sich sogar, den eben beschriebenen Abschnitt so anzuordnen, dass die Oberfläche dieses Abschnitts und die Oberseiten der beiden ersten Abschnitte auf einer gemeinsamen Ebene liegen.

Ein ganz enges Stapeln mehrerer Einkaufswagen wird deshalb erzielt, weil die hinteren und die vorderen Rahmenabschnitte der Stützeinrichtungen im Versatz so angeordnet sind, dass sich in gestapeltem Zustand zweier Einkaufswagen die vorderen Rahmenabschnitte eines rückwärtig eingeschobenen Einkaufswagens zwischen den hinteren Rahmenabschnitten des vorausbefindlichen Einkaufswagens befinden, was ebenfalls als Vorteil zu werten ist,

Ein weiterer Vorteil ergibt sich, wenn die beiden Stützabschnitte der vorderen Rahmenabschnitte zur Bildung des Querverbindungsstücks benutzt werden, welches bekanntlich als weitere Auflage für die untere Abstelleinrichtung vorgesehen ist. Da die Stützabschnitte der vorderen Rahmenabschnitte zu den hinteren Rahmenabschnitten gerichtet sind, lassen diese sich in vorteilhafter Weise so weit nach hinten führen, dass auch die untere Abstelleinrichtung sehr lang gestaltet werden kann, um zwei Getränkekisten sicher aufnehmen zu können.

Die Neuerung wird anhand eines Ausführungsbeispiels näher erläutert, wobei mögliche Alternativen angesprochen und deren Vorteile beschrieben sind. Es zeigt
- Fig. 1: einen Einkaufswagen in Seitenansicht;
- Fig. 2: das Fahrgestell des in Fig.1 beschriebenen Einkaufswagens in Draufsicht sowie
- Fig. 3: in Seitenansicht zwei Einkaufswagen gemäß Fig. 1 in gestapeltem Zustand.

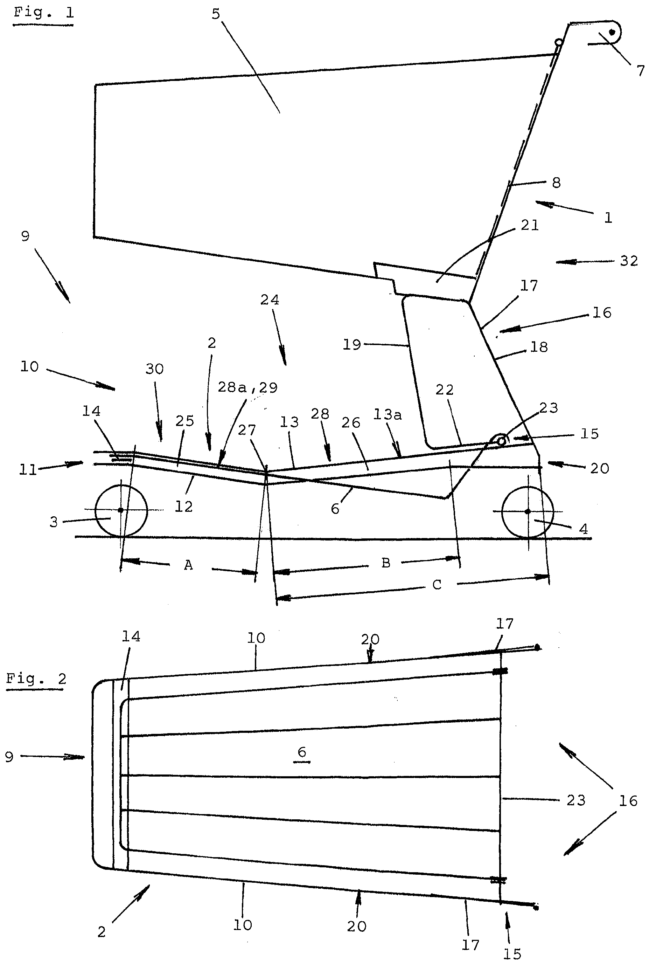

Fig. 1 zeigt einen mit gleichen oder ähnlichen Wagen stapelbaren Einkaufswagen 1. Der Einkaufswagen 1 weist ein mit vorderen und mit hinteren Fahrrollen 3, 4 ausgestattetes Fahrgestell 2 auf. Das Fahrgestell 2 trägt mit Hilfe von Stützmitteln 21 eine obere Abstelleinrichtung 5 zur Aufnahme von Ware. Üblicherweise ist die obere Abstelleinrichtung 5 als konischer Korb gestaltet, der rückseitig eine Schiebeeinrichtung 7 trägt und ebenfalls rückseitig mit einer schwenkbaren Klappe 8 ausgestattet ist, um in bekannter Weise das Stapeln mehrerer Einkaufswagen 1 zu ermöglichen. Die Vorderseite 9 und die beiden Längsseiten 10 des Fahrgestelles 2 weisen ein unteres Rahmenelement 12 und ein oberes Rahmenelement 13 auf, die beide bevorzugt aus dickem Draht mit kreisrundem Querschnitt gebildet sind. Im vorderen Bereich 11 des Fahrgestelles 2 ist in ebenfalls bekannter Weise eine untere Abstelleinrichtung 6 auf einer ersten Abstützstelle 14 gelagert. Die untere Abstelleinrichtung 6, die sich unterhalb der oberen Abstelleinrichtung 5 befindet, ist zur Aufnahme weiterer Ware, insbesondere von Getränkekisten vorgesehen. Rückseitig ist am Fahrgestell 2 ein Querverbindungsstück 23 vorgesehen, das eine zweite Abstützstelle 15 für die untere Abstelleinrichtung 6 bildet. Die untere Abstelleinrichtung 6 lässt sich, je nach Art ihrer Lagerung und je nach ihrer Gestaltung, in bekannter Weise entweder vorne oder hinten ein Stück weit anheben, um ebenfalls den Stapelvorgang zu ermöglichen. Rückseitig, also an der Rückseite 32 des Einkaufswagens 1, ist eine Stützeinrichtung 16 vorgesehen, die Bestandteil des Fahrgestelles 2 ist. Die Stützeinrichtung 16 weist zwei Stützrahmen 17 auf, die an den Längsseiten 10 des Fahrgestelles 2 angeordnet sind. Die Stützrahmen 17 sind auf ihrer oberen Seite mit je einem Stützmittel 21 ausgestattet und mit dem unteren und mit dem oberen Rahmenelement 12, 13 verbunden. Jeder Stützrahmen 17 beinhaltet einen hinteren Rahmenabschnitt 18 und einen vorderen Rahmenabschnitt 19. Jeder hintere Rahmenabschnitt 18 ist im Beispiel kreuzweise mit den Außenseiten 20 des unteren und des oberen Rahmenelements 12, 13 verbunden. Das untere Rahmenelement 12 und das obere Rahmenelement 13 sind in dem zwischen den vorderen und den hinteren Fahrrollen 3, 4 befindlichen Bereich 24 ein Stück weit nach unten abgeknickt, so dass zwei erste Abschnitte 25 und zwei zweite Abschnitte 26 gebildet sind, die eine gemeinsame Abknickung 27 bilden. Die von der Vorderseite 9 des Fahrgestelles 2 ausgehenden, und zur Rückseite 32 hin abfallenden ersten Abschnitte 25 des unteren und des oberen Rahmenelements 12, 13 sind im Beispiel kürzer, als die von der gemeinsamen Abknickung 27 aus ebenfalls zur Rückseite 32 führenden ansteigenden zweiten Abschnitte 26 des unteren und des oberen Rahmenelements 12, 13, siehe auch die eingefügten Maße. Im Beispiel ist das Maß A gleich oder kleiner als Maß B und kleiner als Maß C, wobei letzteres die Länge der zweiten Abschnitte (26) des oberen Rahmenelementes zeigen soll. Die Maße A und B beinhalten nicht die Länge möglicher horizontaler Endabschnitte der Abschnitte 25 und 26, wie diese aus der Zeichnung ersichtlich sind. Jeder vordere Rahmenabschnitt 19 der beiden Stützrahmen 17 ist nach hinten gerichtet abgebogen, so dass jeweils ein zum jeweiligen hinteren Rahmenabschnitt 18 gerichteter Stützabschnitt 22 gebildet ist. Jeder Stützabschnitt 22 liegt auf der Oberseite 13a des oberen Rahmenelementes 13 auf und ist mit diesem durch Verschweißen verbunden. Das Querverbindungsstück 23 kann ein gesondertes Teil sein, es kann aber auch als ein aus den vorderen Rahmenabschnitten 19 hervorgehender gemeinsamer Abschnitt ausgebildet sein, der in die Stützabschnitte 22 übergeht. Die freien Enden der vorderen Rahmenabschnitte 19 sind dann beispielsweise mittig durch Pressschweißen zusammengefügt, um das Querverbindungsstück 23 zu bilden. Auf diese Weise erspart man sich ein gesondertes Querverbindungsstück 23 und zusätzliche Schweißvorgänge. Das Querverbindungsstück 23 befindet sich zwischen den hinteren und vorderen Rahmenabschnitten 18, 19, um ein sehr enges Stapeln der Einkaufswagen 1 zu ermöglichen. Ein Abschnitt 28a der Stellfläche 28 der unteren Abstelleinrichtung 6 verläuft im Bereich der ersten Abschnitte 25 zumindest zwischen der Abknickung 27 und der ersten Abstützstelle 14 entweder parallel zum oberen Rahmenelement 13 oder steiler als das obere Rahmenelement 13. Der Abschnitt 28a liegt mit seiner Oberseite 29 auf der gleichen Ebene 30, wie die Oberseite 13a des oberen Rahmenelements 13 im Bereich der beiden ersten Abschnitte 25. Die gedanklich aufgespannte Ebene 30 fällt somit zur Rückseite 32 hin ab, wobei angemerkt werden darf, dass durch übliche Fertigungstoleranzen sich einstellende Abweichungen gegenüber der rein geometrischen Vorgabe von der Neuerung ebenfalls erfasst werden. Dies betrifft sowohl die Parallelität zwischen dem Abschnitt 28a und dem oberen Rahmenelement 13 als auch das konstruktive Merkmal, wonach sich die Oberseite 29 des Abschnittes 28a auf der gleichen Ebene 30 befindet wie die Oberseite 13a des oberen Rahmenelementes 13.

Ergänzend zu Fig. 1 zeigt Fig. 2 das Fahrgestell 2 des zuvor beschriebenen Einkaufswagens 1 in Draufsicht. Man erkennt die Vorderseite 9 und die beiden Längsseiten 10 des Fahrgestelles 2. Die Längsseiten 10 des Fahrgestelles 2 gehen in Schieberichtung des Einkaufswagens 1 spitzwinklig aufeinander zu. Das Fahrgestell 2 besitzt demnach einen trapezförmigen Grundriss, dem die längere parallele Seite fehlt. Erkennbar sind nicht nur die beiden Stützrahmen 17 der Stützeinrichtung 16, sondern auch das Querverbindungsstück 23. Die untere Abstelleinrichtung 6 ist an der ersten und an der zweiten Abstützstelle 14, 15 so abgestützt und gelagert, dass sich die untere Abstelleinrichtung 6 entweder auf Höhe der zweiten Abstützstelle 15 oder auf Höhe der ersten Abstützstelle 14 ein Stück weit anheben lässt. Die untere Abstelleinrichtung 6 ist beispielsweise als Drahtgitterkonstruktion gestaltet. Die Abstelleinrichtung 6 kann aber auch ganz oder teilweise als Kunststoffteil ausgebildet sein.

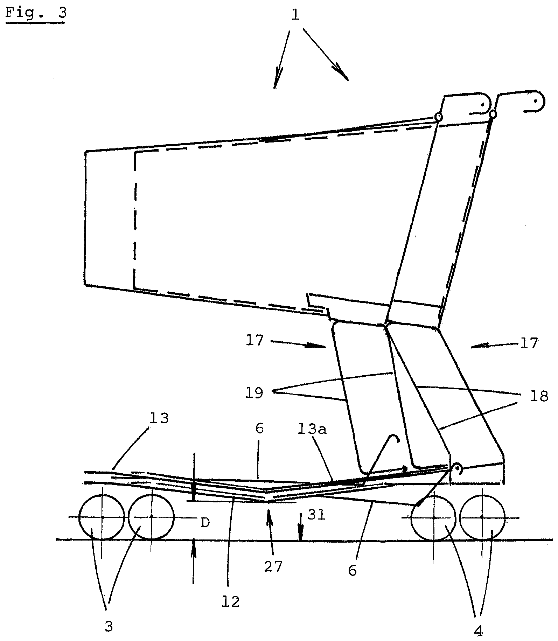

Fig. 3 zeigt zwei ineinander geschobene, also gestapelte Einkaufswagen 1. Der geringste Stapelabstand beider Einkaufswagen 1 ist so gewählt, dass die in Schieberichtung der Einkaufswagen 1 ausgerichteten vorderen Fahrrollen 3 und die ebenfalls in Schieberichtung ausgerichteten hinteren Fahrrollen 4, so wie aus der Zeichnung ersichtlich, von Laufrad zu Laufrad jeweils einen Abstand von nur 2 oder 3mm einnehmen. Das dadurch erzielte enge Stapeln mehrerer Einkaufswagen 1 ist deshalb möglich, weil die hinteren Rahmenabschnitte 18 und die vorderen Rahmenabschnitte 19, bezogen auf den Verlauf des unteren und des oberen Rahmenelementes 12, 13 versetzt angeordnet sind. Dieser Versatz ergibt sich dadurch, weil jeder hintere Rahmenabschnitt 18 mit den Außenseiten 20 des unteren und des oberen Rahmenelementes 12, 13 verbunden ist, während jeder vordere Rahmenabschnitt 19 auf der Oberseite 13a des oberen Rahmenelementes 13 aufliegt, siehe auch Beschreibung zu Fig. 1. Aus der Zeichnung ist ersichtlich, dass jeder vordere Rahmenabschnitt 19 steiler verläuft als jeder hintere Rahmenabschnitt 18. Diese Anordnung lässt relativ breit gestaltete Stützrahmen 17 entstehen, wobei es durch die versetzte Anordnung der hinteren und der vorderen Rahmenabschnitte 18, 19 möglich ist, dass sich in gestapeltem Zustand zweier Einkaufswagen 1, die vorderen Rahmenabschnitte 19 eines rückwärtig eingeschobenen Einkaufswagens 1, in der Zeichnung rechts, mit den hinteren Rahmenabschnitte 18 des vorausbefindlichen Einkaufswagens 1, in der Zeichnung links, überschneiden oder ebenfalls von der Seite betrachtet deckungsgleich mit diesen sind. Das heißt, die vorderen Rahmenabschnitte 19 des eingeschobenen Einkaufswagens 1 befinden sich, in Schieberichtung der Einkaufswagen 1 betrachtet, zwischen den hinteren Rahmenabschnitten 18 des vorausbefindlichen Einkaufswagens 1. Der von der Laufebene 31 der Fahrrollen 3, 4 nach oben gemessene Abstand D zur untersten Begrenzung der gemeinsamen Abknickung 27 ist so gewählt, dass deren Laufräder beim Bewegen eines Stapels mehrerer Einkaufswagen 1 nicht an das untere Rahmenelement 12 der Einkaufswagen 1 anstoßen. Im gestapelten Zustand wird die untere Abstelleinrichtung 6 eines vorausbefindlichen Einkaufswagens 1 vom Fahrgestell 2 des jeweils hinteren Einkaufswagens 1 ein Stück weit nach oben gedrückt, wie dies auch aus der Zeichnung ersichtlich ist.

Die zur Herstellung der beschriebenen Einkaufswagen 1 geeigneten Halbzeuge sind durch den Stand der Technik bekannt.

## Patentansprüche

1. Mit gleichen oder mit ähnlichen Wagen stapelbarer Einkaufswagen (1), mit einem mit vorderen und mit hinteren Fahrrollen (3, 4) ausgestatteten Fahrgestell (2), mit einer oberen Abstelleinrichtung (5) zur Aufnahme von Ware, mit einer rückseitig befindlichen Schiebeeinrichtung (7) und mit einer unteren Abstelleinrichtung (6), die auf einer im vorderen Bereich (11) des Fahrgestelles (2) befindlichen ersten Abstützstelle (14) gelagert ist, wobei die Vorderseite (9) und die beiden Längsseiten (10) des Fahrgestelles (2) ein unteres Rahmenelement (12) und ein oberes Rahmenelement (13) aufweisen, deren Längsseiten (10) sich in Schieberichtung des Einkaufswagens (1) in einem spitzen Winkel annähern und das obere Rahmenelement (13) an beiden Längsseiten (10) und in einem zwischen den vorderen und den hinteren Fahrrollen (3, 4) befindlichen Bereich (24) nach unten abgeknickt ist, wobei das Fahrgestell (2) rückseitig eine Stützeinrichtung (16) aufweist, die mit dem unteren und mit dem oberen Rahmenelement (12, 13) verbunden ist und beidseitig je einen Stützrahmen (17) aufweist, wobei jeder Stützrahmen (17) mit einem oben angeordneten Stützmittel (21) zum Befestigen der oberen Abstelleinrichtung (5) ausgestattet ist, wobei ferner jeder Stützrahmen (17) einen hinteren Rahmenabschnitt (18) und einen vorderen Rahmenabschnitt (19) aufweist und wobei rückseitig ein Querverbindungsstück (23) vorgesehen ist, das eine zweite Abstützstelle (15) für die untere Abstelleinrichtung (6) bildet, **dadurch gekennzeichnet, dass** auch das untere Rahmenelement (12) in dem zwischen den vorderen und den hinteren Fahrrollen (3, 4) befindlichen Bereich (24) an beiden Längsseiten (10) nach unten abgeknickt ist und in Seitenansicht betrachtet mit dem oberen Rahmenelement (13) eine gemeinsame Abknickung (27) bildet, wobei durch die Abknickung (27) an jeder Längsseite (10) jeweils ein erster, zur Rückseite (32) abfallender Abschnitt (25) und jeweils ein zweiter, zur Rückseite (32) hin ansteigender Abschnitt (26) gebildet sind und dass ein zwischen der gemeinsamen Abknickung (27) und der ersten Abstützstelle (14) befindlicher Abschnitt (28a) der Stellfläche (28) der unteren Abstelleinrichtung (6), entweder parallel zum oberen Rahmenelement (13) verläuft oder steiler als das obere Rahmenelement (13) angeordnet ist.

2. Einkaufswagen nach Anspruch 1, **dadurch gekennzeichnet, dass** jeder erste Abschnitt (25) entweder gleich lang oder kürzer ist als jeder zweite Abschnitt (26).

3. Einkaufswagen nach Anspruch 1, **dadurch gekennzeichnet, dass** das Querbindungsstück (23) als ein aus den vorderen Rahmenabschnitten (19) hervorgehender gemeinsamer Abschnitt ausgebildet ist.

4. Einkaufswagen nach Anspruch 3, **dadurch gekennzeichnet, dass** sich das Querverbindungsstück (23) zwischen den hinteren und den vorderen Rahmenabschnitten (18, 19) befindet.

5. Einkaufswagen nach Anspruch 1, **dadurch gekennzeichnet, dass** der Abschnitt (28a) der Stellfläche (28) der unteren Abstelleinrichtung (6) mit seiner Oberseite (29) auf der gleichen Ebene (30) liegt wie die Oberseiten (13a) der beiden ersten Abschnitte (25).

6. Einkaufswagen nach Anspruch 1, **dadurch gekennzeichnet, dass** jeder vordere Rahmenabschnitt (19) steiler verläuft als jeder hintere Rahmenabschnitt (18).

7. Einkaufswagen nach Anspruch 1, **dadurch gekennzeichnet, dass** sich in gestapeltem Zustand zweier Einkaufswagen (1), und von der Seite betrachtet, die vorderen Rahmenabschnitte (19) eines rückwärtig eingeschobenen Einkaufswagens (1) mit den hinteren Rahmenabschnitten (18) des vorausbefindlichen Einkaufswagens (1) überschneiden oder mit diesen deckungsgleich sind.

8. Einkaufswagen nach Anspruch 1, **dadurch gekennzeichnet, dass** sich in gestapeltem Zustand zweier Einkaufswagen (1), und in deren Schieberichtung betrachtet, die vorderen Rahmenabschnitte (19) des eingeschobenen Einkaufswagens (1) zwischen den hinteren Rahmenabschnitten (18) des vorausbefindlichen Einkaufswagens (1) befinden.

9. Einkaufswagen nach Anspruch 1, **dadurch gekennzeichnet, dass** das untere Rahmenelement (12) nur so weit nach unten abgeknickt ist, dass sich in einem Stapel mehrerer Einkaufswagen (1) die vorderen und die hinteren Fahrrollen (3, 4) um ihre senkrechte Achse drehen lassen.

## Claims

1. Shopping trolley (1) which is stackable with the same or with similar trollies, having an underframe (2) equipped with front and with rear rollers (3, 4), having an upper storage device (5) for receiving goods, having a pushing device (7) located on the rear side and having a lower storage device (6) which is mounted on a first support point (14) located in the front region (11) of the underframe (2), wherein the front side (9) and the two longitudinal sides (10) of the underframe (2) have a lower frame element (12) and an upper frame element (13), the longitudinal sides (10) of which come closer at an acute angle in the pushing direction of the shopping trolley (1) and the upper frame element (13) is bent downwards at both longitudinal sides (10) and in a region (24) located between the front and the rear rollers (3, 4), wherein the underframe (2) has a support device (16) on the rear side which is connected to the lower and to the upper frame element (12, 13) and has on each of the two sides a support frame (17), wherein each support frame (17) is equipped with a support means (21) arranged at the top for attaching the upper storage device (5), wherein furthermore, each support frame (17) has a rear frame section (18) and a front frame section (19) and wherein on the rear side a transverse connecting piece (23) is provided which forms a second support point (15) for the lower storage device (6), **characterised in that** the lower frame element (12) is also bent downwards at both longitudinal sides (10) in the region (24) located between the front and the rear rollers (3, 4) and, seen in side view, forms a common bend (27) with the upper frame element (13), wherein respectively a first section (25) falling away towards the rear side (32) and respectively a second section (26) rising towards the rear side (32) are formed by the bend (27) at each longitudinal side (10) and **in that** a section (28a) of the charging space (28) of the lower storage device (6) located between the common bend (27) and the first support point (14), either runs parallel to the upper frame element (13) or is arranged to be steeper than the upper frame element (13).

2. Shopping trolley according to claim 1, **characterised in that** each first section (25) is either the same length or shorter than each second section (26).

3. Shopping trolley according to claim 1, **characterised in that** the transverse connecting piece (23) is formed as a common section coming from the front frame sections (19).

4. Shopping trolley according to claim 3, **characterised in that** the transverse connecting piece (23) is located between the rear and the front frame sections (18, 19).

5. Shopping trolley according to claim 1, **characterised in that** the section (28a) of the charging space (28) of the lower storage device (6) lies with its upper side (29) on the same plane (30) as the upper sides (13a) of the two first sections (25).

6. Shopping trolley according to claim 1, **characterised in that** each front frame section (19) runs more steeply than each rear frame section (18).

7. Shopping trolley according to claim 1, **characterised in that** in the stacked state of two shopping trollies (1), and seen from the side, the front frame sections (19) of a rearwardly pushed-in shopping trolley (1) overlap with the rear frame sections (18) of the preceding shopping trolley (1) or are congruent with them.

8. Shopping trolley according to claim 1, **characterised in that** in the stacked state of two shopping trollies (1), and seen in the pushing direction thereof, the front frame sections (19) of the pushed-in shopping trolley (1) are located between the rear frame sections (18) of the preceding shopping trolley (1).

9. Shopping trolley according to claim 1, **characterised in that** the lower frame element (12) is bent downwards only so far that in a stack of several shopping trollies (1), the front and the rear rollers (3, 4) can be rotated about their perpendicular axis.

## Revendications

1. Chariot de supermarché (1) pouvant être empilé avec des chariots identiques ou similaires, avec un châssis (2) équipé de roulettes de déplacement avant et arrière (3, 4), avec un dispositif de rangement supérieur (5) servant à recevoir des marchandises, avec un dispositif de poussée (7) se trouvant côté arrière et avec un dispositif de rangement inférieur (6), qui est monté sur un premier emplacement de soutien (14) se trouvant dans la zone avant (11) du châssis (2), dans lequel le côté avant (9) et les deux côtés longitudinaux (10) du châssis (2) présentent un élément de cadre inférieur (12) et un élément de cadre supérieur (13), dont les côtés longitudinaux (10) se rapprochent dans la direction de poussée du chariot de supermarché (1) selon un angle aigu et l'élément de cadre supérieur (13) est plié vers le bas au niveau des deux côtés longitudinaux (10) et dans une zone (24) se trouvant entre les roulettes de déplacement avant et arrière (3, 4), dans lequel le châssis (2) présente côté arrière un dispositif d'appui (16), qui est relié aux éléments de cadre inférieur et supérieur (12, 13) et présente de part et d'autre respectivement un cadre d'appui (17), dans lequel chaque cadre d'appui (17) est équipé d'un moyen d'appui (21) disposé en haut servant à fixer le dispositif de rangement supérieur (5), dans lequel en outre chaque cadre d'appui (17) présente une section de cadre arrière (18) et une section de cadre avant (19) et dans lequel est prévue côté arrière une pièce de liaison transversale (23), qui forme un deuxième emplacement de soutien (15) pour le dispositif de rangement inférieur (6), **caractérisé en ce qu'**également l'élément de cadre inférieur (12) est plié vers le bas dans la zone (24) se trouvant entre les roulettes de déplacement avant et arrière (3, 4) au niveau des deux côtés longitudinaux (10) et forme, vu dans une coupe latérale avec l'élément de cadre supérieur (13), un pli (27) commun, dans lequel respectivement une première section (25) descendant vers le côté arrière (32) et respectivement une deuxième section (26) montant vers le côté arrière (32) sont formées par le pli (27) au niveau de chaque côté longitudinal (10), et qu'une section (28a), se trouvant entre le pli (27) commun et le premier emplacement de soutien (14), de la surface de placement (28) du dispositif de rangement inférieur (6) soit s'étend de manière parallèle par rapport à l'élément de cadre supérieur (13) soit est disposée de manière plus raide que l'élément de cadre supérieur (13).

2. Chariot de supermarché selon la revendication 1, **caractérisé en ce que** chaque première section (25) est soit de la même longueur soit plus courte que chaque deuxième section (26).

3. Chariot de supermarché selon la revendication 1, **caractérisé en ce que** la pièce de liaison transversale (23) est réalisée en tant qu'une section commune faisant saillie des sections de cadre avant (19).

4. Chariot de supermarché selon la revendication 3, **caractérisé en ce que** la pièce de liaison transversale (23) se trouve entre les sections de cadre arrière et avant (18, 19).

5. Chariot de supermarché selon la revendication 1, **caractérisé en ce que** la section (28a) de la surface de placement (28) du dispositif de rangement inférieur (6) se situe avec son côté supérieur (29) sur le même plan (30) que les côtés supérieurs (13a) des deux premières sections (25).

6. Chariot de supermarché selon la revendication 1, **caractérisé en ce que** chaque section de cadre avant (19) s'étend de manière plus raide que chaque section de cadre arrière (18).

7. Chariot de supermarché selon la revendication 1, **caractérisé en ce que** dans un état empilé de deux chariots de supermarché (1), et vues depuis le côté, les sections de cadre avant (19) d'un chariot de supermarché (1) poussé vers l'arrière se croisent avec les sections de cadre arrière (18) du chariot de supermarché (1) situé à l'avant ou coïncident avec celles-ci.

8. Chariot de supermarché selon la revendication 1, **caractérisé en ce que** dans un état empilé de deux chariots de supermarché (1), et vues dans leur direction de poussée, les sections de cadre avant (19) du chariot de supermarché (1) inséré se trouvent entre les sections de cadre arrière (18) du chariot de supermarché (1) se trouvant à l'avant.

9. Chariot de supermarché selon la revendication 1, **caractérisé en ce que** l'élément de cadre inférieur (12) n'est plié vers le bas que dans la mesure où, dans une pile de plusieurs chariots de supermarché (1), les roulettes de déplacement avant et arrière (3, 4) peuvent tourner autour de leur axe vertical.
